# EUROPEAN PATENT APPLICATION

(11) **EP 4 734 319 A1**
(43) Date of publication of application: **29.04.2026**
(21) Application number: 24829735.0
(22) Date of filing: 16.01.2024
(51) Int. Cl.: H02J 3/32, H02M 1/32

(54) **ENERGY STORAGE VALVE SUB-MODULE, ENERGY STORAGE VALVE AND ENERGY STORAGE STATION**

(30) Priority: 28.06.2023 CN 202310779892
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: ZHUANG, Yan, Shanghai 200241 (CN); GUO, Zide, Shanghai 200241 (CN); YU, Dongxu, Shanghai 200241 (CN); LU, Yanhua, Shanghai 200241 (CN); ZHAO, Huiwen, Shanghai 200241 (CN)
(74) Representative: Gong, Jinping
(86) International application number: PCT/CN2024/072466
(87) International publication number: WO 2025/001072

(57) **Abstract**

This application relates to the field of power electronics technology and provides an energy storage valve submodule (100), an energy storage valve, and an energy storage station. In the energy storage valve submodule (100), a power module (120) can disconnect an electrical connection from an energy storage module (110) through a switch module (130), forming electrical isolation, thereby achieving the electrical disconnection between the power module (120) and the energy storage module (110). During maintenance of components other than the energy storage module (110) in the energy storage valve, leakage current is prevented, ensuring the personal safety of maintenance personnel. Similarly, in the case of a non-severe fault on the energy storage module (110) side of the energy storage valve, the switch module (130) can be used to isolate the energy storage module (110) from the system under the premise that the energy storage valve is locked, without affecting the safe operation of the entire system, effectively improving system availability.

## Description

This application claims priority to Chinese Patent Application No. 202310779892.9, filed with the China National Intellectual Property Administration on June 28, 2023 and entitled "ENERGY STORAGE VALVE SUBMODULE, ENERGY STORAGE VALVE, AND ENERGY STORAGE STATION", which is incorporated herein by reference in its entirety.

### TECHNICAL FIELD

This application relates to the field of power electronics technology, and particularly relates to an energy storage valve submodule, an energy storage valve, and an energy storage station.

### BACKGROUND

Currently, from the development of market trends, the application of high-voltage direct-connected energy storage systems is becoming increasingly widespread. Energy storage stations are widely used in the field of power transmission and distribution grids. With the continuous expansion of application fields for energy storage stations, market demand is also continuously increasing.

When performing maintenance on a high-voltage direct-connected energy storage system, under de-energized conditions, due to the inherent characteristics of the high-voltage direct-connected energy storage system, the voltage accumulates as submodules are connected in series. Even if a main circuit is disconnected from a high-voltage bus, a ground voltage of each submodule cannot be directly reduced to the voltage level of a single submodule, and the system still exhibits high voltage to ground. Additionally, due to the presence of voltage in the energy storage module, the voltage of capacitors in the power module cannot be fully discharged to zero, resulting in leakage current in the system and low safety for personnel performing maintenance. Furthermore, in the case of non-severe faults on the energy storage module side, the fault-handling methods in related technologies are limited to electronic bypassing of the power module or activation of a bypass switch, requiring the system to be shut down for maintenance, resulting in low system availability.

### SUMMARY

In view of the above issues, this application provides an energy storage valve submodule, an energy storage valve, and an energy storage station, aiming to address the issues of low maintenance safety and low system availability in related high-voltage direct-connected energy storage system.

According to a first aspect, an embodiment of this application provides an energy storage valve submodule, including an energy storage module, a power module, and a switch module. The power module is connected to the energy storage module through the switch module, or the power module disconnects an electrical connection from the energy storage module through the switch module, forming electrical isolation.

In the technical solution of the embodiment of this application, in the energy storage valve submodule, a power module can disconnect an electrical connection from an energy storage module through a switch module, forming electrical isolation. During maintenance of components other than the energy storage module, the chassis platform of the energy storage system can be effectively grounded, leakage current is prevented, ensuring the personal safety of maintenance personnel. Similarly, in the case of a non-severe fault on the energy storage module side, the switch module can be used to isolate the energy storage module from the system under the premise that the energy storage valve is locked, without affecting the safe operation of the entire system, effectively improving system availability.

In some embodiments, the switch module includes a first switch group, and the first switch group is connected to a positive terminal and a negative terminal of the power module and a positive electrode and a negative electrode of the energy storage module.

In the technical solution of the embodiment of this application, a centralized control device is used to improve the flexibility of switch module control.

In some embodiments, the first switch group includes a first switch and a second switch;
the first switch is connected between the positive terminal of the power module and the positive electrode of the energy storage module; and
the second switch is connected between the negative terminal of the power module and the negative electrode of the energy storage module.

In the technical solution of the embodiment of this application, the power module and the energy storage module can be controlled to be connected through the first switch and the second switch, respectively, simplifying the circuit design while achieving the electrical disconnection between the power module and the energy storage module.

In some embodiments, the first switch and the second switch each include a load switch.

In the technical solution of the embodiment of this application, the load switch can interrupt current while ensuring electrical isolation. The interruption speed of the load switch typically reaches the level of tens of milliseconds, providing a fast response. However, the response speed and protection effect are less than those of a fuse in the energy storage module, thus serving as a backup and redundant protection. In cases where the fuse on the energy storage module side fails to provide protection, the load switch protects the energy storage module.

In some embodiments, the first switch and the second switch each include an isolating switch.

In the technical solution of the embodiment of this application, the isolating switch may be, such as an isolator or an isolating knife switch, where the isolating switch may be of a type capable of interrupting load current, thereby achieving the electrical disconnection between the power module and the energy storage module. Alternatively, a type incapable of interrupting load current may be used, in which case the power module can be modulated to reduce the current between the power module and the energy storage module to near zero (though transistors in the power module may have slight leakage current, load current interruption can still be achieved), thereby achieving current interruption. Similarly, the electrical disconnection between the power module and the energy storage module can also be achieved to achieve reliable electrical isolation.

In some embodiments, a second switch group configured to interrupt load current is also included, and the second switch group is connected to the first switch group.

In the technical solution of the embodiment of this application, when the isolating switch in the first switch group is of a type incapable of interrupting load current, the second switch group is provided to interrupt the load current, thereby achieving the electrical disconnection between the power module and the energy storage module and achieving reliable electrical isolation.

In some embodiments, the second switch group includes a solid-state circuit breaker, and the solid-state circuit breaker is connected in series with the first switch or the second switch.

In the technical solution of the embodiment of this application, to achieve reliable isolation, a solid-state circuit breaker and an isolating switch are used in combination. The solid-state circuit breaker reduces the circuit current to near zero, interrupting the load current, and the isolating switch then isolates the system, the electrical disconnection between the power module and the energy storage module is achieved to achieve reliable electrical isolation.

In some embodiments, the second switch group includes:
two circuit breakers, the two circuit breakers being respectively connected in series with the first switch and the second switch; or
two relays, the two relays being respectively connected in series with the first switch and the second switch.

In the technical solution of the embodiment of this application, to achieve reliable isolation, with a circuit breaker or a relay is used in combination with an isolating switch. The circuit breaker or relay is employed to cut off the current in the circuit, and the isolating switch then interrupts to achieve the electrical disconnection between the power module and the energy storage module to achieve reliable electrical isolation.

In some embodiments, the power module serves as the second switch group.

In the technical solution of the embodiment of this application, to achieve reliable isolation, the power module is directly modulated to reduce the circuit current of the energy storage valve submodule to near zero, achieving load current interruption, and the isolating switch then isolates the system, achieving the electrical disconnection between the power module and the energy storage module. This solution is simpler and more cost-effective.

In some embodiments, the power module includes a first switch element and an energy storage element connected in parallel with the first switch element, and the energy storage element is connected in parallel with the energy storage module through the switch module.

In the technical solution of the embodiment of this application, when connecting the power module to the energy storage module, the energy storage element can be charged first, thereby reducing the impact of large currents on the first switch element and improving the reliability of the energy storage valve submodule.

In the technical solution of the embodiment of this application, the power module includes a half-bridge circuit or a full-bridge circuit.

By adopting the above solution, flexible configuration of the power module is achieved, enhancing the design flexibility of the energy storage valve submodule.

In some embodiments, a controller is also included, the controller is connected to the power module and the switch module, the controller is configured to output a drive signal and a control signal, the drive signal is configured to drive the power module to turn on and off, and the control signal is configured to control the switch module to turn on and off.

In the technical solution of the embodiment of this application, both the power module and the switch module can be controlled online using the controller, achieving the intelligent and automated operation of the energy storage valve submodule.

According to a second aspect, an embodiment of this application further provides an energy storage valve, and the energy storage valve includes the energy storage valve submodule as described above.

In the technical solution of the embodiment of this application, each energy storage valve submodule in the energy storage valve can disconnect the power module from the energy storage module through the switch module in an electrically isolated manner, decoupling the power module and the energy storage module electrically. During maintenance of components other than the energy storage module in the energy storage valve, leakage current is prevented, ensuring the personal safety of maintenance personnel. Similarly, in the case of a non-severe fault on the energy storage module side of the energy storage valve, the switch module can be used to isolate the energy storage module from the system under the premise that the energy storage valve is locked, without affecting the safe operation of the entire system, improving system availability.

According to a third aspect, an embodiment of this application further provides an energy storage station, and the energy storage station includes the energy storage valve submodule as described above.

In the technical solution of the embodiment of this application, each energy storage valve submodule in the energy storage station can disconnect the power module from the energy storage module through the switch module in an electrically isolated manner, decoupling the power module and the energy storage module electrically. During maintenance of components other than the energy storage module in the energy storage station, leakage current is prevented, ensuring the personal safety of maintenance personnel. Similarly, in the case of a non-severe fault on the energy storage module side of the energy storage station, the switch module can be used to isolate the energy storage module from the system under the premise that the energy storage station is locked, without affecting the safe operation of the entire system, improving system availability.

The above descriptions are merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a schematic structural diagram of an energy storage valve submodule provided by an embodiment of this application;
FIG. 2 is another schematic structural diagram of an energy storage valve submodule provided by an embodiment of this application;
FIG. 3 is another schematic structural diagram of an energy storage valve submodule provided by an embodiment of this application;
FIG. 4 is another schematic structural diagram of an energy storage valve submodule provided by an embodiment of this application;
FIG. 5 is another schematic structural diagram of an energy storage valve submodule provided by an embodiment of this application;
FIG. 6 is a schematic structural diagram of a power module in an energy storage valve submodule provided by an embodiment of this application;
FIG. 7 is a schematic structural diagram of a power module in an energy storage valve submodule provided by an embodiment of this application;
FIG. 8 is a schematic structural diagram of an MMC-type alternating-current direct-connected energy storage system provided by an embodiment of this application;
FIG. 9 is a schematic structural diagram of a direct-current direct-connected energy storage system provided by an embodiment of this application; and
FIG. 10 is a schematic structural diagram of an alternating-current direct-connected energy storage system provided by an embodiment of this application.

### DESCRIPTION OF EMBODIMENTS

The following describes in detail some embodiments of technical solutions of this application with reference to the accompanying drawings. The following embodiments are merely intended for a clearer description of the technical solutions of this application and therefore are merely used as examples which do not constitute any limitation on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the descriptions of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means at least two unless otherwise specifically defined.

In this specification, reference to "embodiment" means that specific features, structures, or characteristics described with reference to the embodiment may be included in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B.

In the description of the embodiments of this application, the term "a plurality of" means more than two (inclusive). Similarly, "a plurality of groups" means more than two (inclusive) groups and "a plurality of pieces" means more than two (inclusive) pieces.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skills in the art can understand specific meanings of these terms in this application as appropriate to specific situations.

High-voltage direct-connected energy storage systems are mainly categorized into several technical routes, including an MMC (Modular Multilevel Converter, Modular Multilevel Converter) type alternating-current direct-connected energy storage system, a direct-current direct-connected energy storage system, and an alternating-current cascaded energy storage system. Compared to traditional energy storage technologies, a direct-connected energy storage system has a higher voltage level and larger capacity, and stronger power grid regulation capability and power grid support function, and has significant research importance for new power systems dominated by renewable energy.

However, current high-voltage direct-connected energy storage systems still face some issues. For example, during maintenance under de-energized conditions, due to the inherent characteristics of the high-voltage direct-connected energy storage system, the voltage accumulates as energy storage valve submodules are connected in series. Even if a main circuit is disconnected from a high-voltage bus, a ground voltage of each energy storage valve submodule cannot be directly reduced to the voltage level of a single submodule, and the system still exhibits high voltage to ground. Additionally, due to the presence of voltage in the energy storage module, if the capacitors in the power module and the energy storage module cannot be electrically decoupled, the capacitor voltage cannot be fully discharged to zero, resulting in leakage current in the system and low safety for personnel performing maintenance. Furthermore, in the case of non-severe faults on the energy storage module side, fault-handling methods are limited to electronic bypassing of the power module or activation of a bypass switch, with limited fault isolation means, electrical breakpoint isolation cannot be achieved. Moreover, in the case where electronic bypassing and bypass switches fail, the system must be shut down for maintenance, resulting in low system availability.

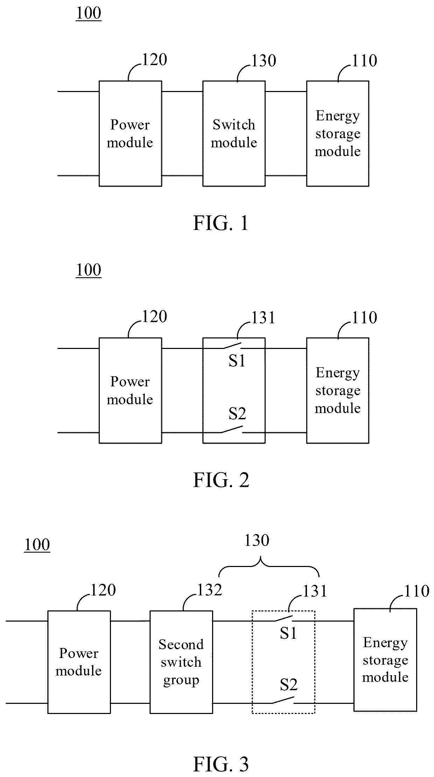

According to some embodiments of this application, referring to FIG. 1, FIG. 1 shows a schematic structural diagram of an energy storage valve submodule provided by an embodiment of this application. For ease of description, only the parts related to this embodiment are shown, with details as follows:
An energy storage valve submodule 100 includes an energy storage module 110, a power module 120, and a switch module 130. The power module 120 is connected to the energy storage module 110 through the switch module 130, or the power module 120 is disconnected from the energy storage module 110 through the switch module 130 in an electrically isolated manner.

The energy storage module 110 mainly includes an energy storage device, and at least one energy storage device is provided. The energy storage device can take various forms, including one or more of electrochemical energy storage devices (such as batteries), supercapacitors, flywheel energy storage, compressed air energy storage, and superconducting energy storage. The power module 120 disconnects an electrical connection from the energy storage module 110 through the switch module 130, forming electrical isolation. Specifically, the switch module 130, or in combination with the power module 120, can form an electrical disconnection point between the power module 120 and the energy storage module 110 in a manner of load current interruption, achieving an electrical disconnection between the power module 120 and the energy storage module 110. When maintenance is required or the energy storage module 110 experiences a fault, the power module 120 can be disconnected from the energy storage module 110 in an electrically isolated manner, allowing the chassis platform of the energy storage system to be effectively grounded. During maintenance of components other than the energy storage module 110, leakage current is prevented, ensuring the personal safety of maintenance personnel. In cases of faults such as relay welding or sticking that prevent effective electric disconnection, this isolation method achieves safe maintenance or replacement of relays or other equipment causing disconnection issues. Similarly, in the case of a non-severe fault on the energy storage module 110 side, the energy storage module 110 is isolated from the system formed by the energy storage valve submodule 100, without affecting the safe operation of the entire system, effectively improving system availability. After a minor fault occurs in the energy storage module 110, temporary methods such as electronic bypassing or bypass switch operation without an isolating switch may lead to changes in the nature of the fault if issues such as power switch conduction occur, potentially causing severe faults such as battery short-circuiting. Introducing this isolation method effectively prevents such issues, fault development can be further prevented, avoiding severe consequences.

According to some embodiments of this application, still referring to FIG. 1. The switch module 130 includes a first switch group. The first switch group is connected to a positive terminal and a negative terminal of the power module 120 and a positive electrode and a negative electrode of the energy storage module 110. The entire switch module can be operated by the same mechanism, integrated into a single device, and controlled by the same control system, allowing for more flexible control. It can be understood that independent switch operation can also be used to achieve electrical isolation.

According to some embodiments of this application, referring to FIG. 2, FIG. 2 shows a schematic structural diagram of an energy storage valve submodule provided by an embodiment of this application. For ease of description, only the parts related to this embodiment are shown, with details as follows:
The first switch group includes a first switch S1 and a second switch S2; the first switch S1 is connected between the positive terminal of the power module 120 and the positive electrode of the energy storage module 110; and the second switch S2 is connected between the negative terminal of the power module 120 and the negative electrode of the energy storage module 110.

In the technical solution of the embodiment of this application, the power module 120 and the energy storage module 110 can be controlled to be connected through the first switch S1 and the second switch S2, respectively, ensuring reliable control and simplifying circuit design while achieving the electrical disconnection between the power module 120 and the energy storage module 110.

In some embodiments, the first switch S1 and the second switch S2 each include a load switch. The load switch, also referred to as a load isolating switch, is a type of isolating switch capable of interrupting load current.

In the technical solution of the embodiment of this application, the load switch can interrupt load current while ensuring electrical isolation. The interruption speed of the load switch typically reaches the level of tens of milliseconds, providing a fast response. However, the response speed and protection effect are less than those of a fuse in the energy storage module 110, thus serving as a backup and redundant protection. In cases where the fuse on the energy storage module 110 side fails to provide protection, the load switch protects the energy storage module 110.

In some embodiments, the first switch S1 and the second switch S2 each include an isolating switch. The isolating switch may be, such as an isolator or isolating knife switch.

In the technical solution of the embodiment of this application, the isolating switch can be of a type capable of interrupting load current, thereby achieving the electrical disconnection between the power module 120 and the energy storage module 110. Alternatively, a type incapable of interrupting load current may be used, in which case other devices, such as modulating the power module 120, can reduce the current between the power module 120 and the energy storage module 110 to near zero (though transistors in the power module 120 may have leakage current, load current interruption can still be satisfied), thereby achieving current interruption. Similarly, the electrical disconnection between the power module 120 and the energy storage module 110 can also be achieved to achieve reliable electrical isolation.

According to some embodiments of this application, referring to FIG. 3, FIG. 3 shows a schematic structural diagram of an energy storage valve submodule provided by an embodiment of this application. For ease of description, only the parts related to this embodiment are shown, with details as follows:
In some embodiments, the switch module 130 further includes a second switch group 140 configured to interrupt load current, and the second switch group 140 is connected to the switch module 130.

For example, when the isolating switch in the switch module 130 is of a type incapable of interrupting load current, the second switch group 140 is further provided to interrupt the load current, thereby achieving the electrical disconnection between the power module 120 and the energy storage module 110 and achieving reliable electrical isolation.

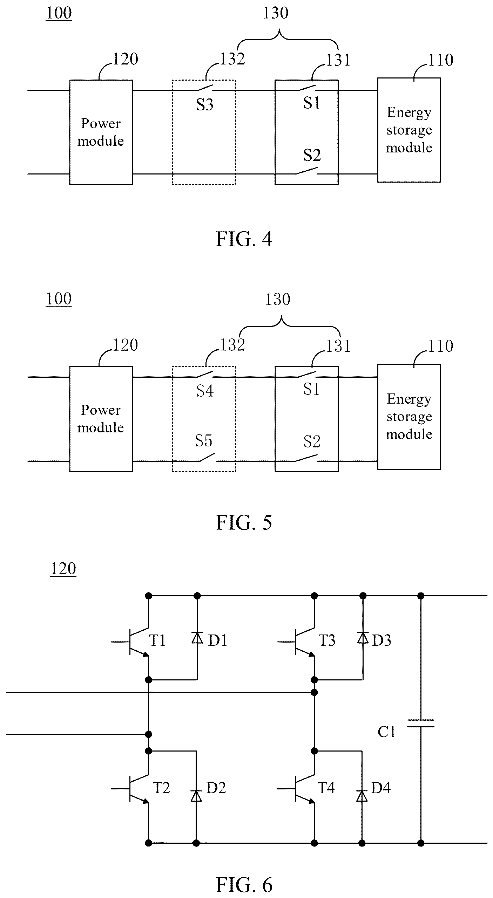

According to some embodiments of this application, referring to FIG. 4, FIG. 4 shows a schematic structural diagram of an energy storage valve submodule provided by an embodiment of this application. For ease of description, only the parts related to this embodiment are shown, with details as follows:
In some embodiments, the second switch group 140 includes a solid-state circuit breaker S3, and the solid-state circuit breaker S3 is connected in series with the first switch S1 or the second switch S2.

The solid-state circuit breaker S3 is a type of fast-acting protective device that uses power electronics to suppress the rise of short-circuit current within a few microseconds and transfer the short-circuit current out of the circuit, which is equivalent to reducing the circuit current to near zero. The response speed and protection capability of the solid-state circuit breaker S3 far exceed those of fuses typically configured in the energy storage system. It can be understood that if the solid-state circuit breaker S3 is used for circuit protection, any fuse does not need to be in the energy storage system, significantly reducing the complexity of fuse configuration. This also avoids the cumbersome process of replacing fuses after the short-circuit fusing of the system, and even if the energy storage system still configures the fuse, the system is only used as a backup and a redundant protection method for the solid-state circuit breaker S3, no longer relying on the fuse as the primary protection method.

In the technical solution of the embodiment of this application, to achieve reliable decoupling, the solid-state circuit breaker S3 is used in combination with the isolating switch. The solid-state circuit breaker S3 reduces the circuit current to near zero, and the isolating switch then isolates the system, thereby achieving the electrical disconnection between the power module 120 and the energy storage module 110, achieving reliable electrical isolation.

According to some embodiments of this application, referring to FIG. 5, FIG. 5 shows a schematic structural diagram of an energy storage valve submodule provided by an embodiment of this application. For ease of description, only the parts related to this embodiment are shown, with details as follows:
In some embodiments, the second switch group 140 includes: two circuit breakers or two relays, as shown by S4 and S5 in FIG. 5. The second switch group 140 includes two circuit breakers, the two circuit breakers being respectively connected in series with the first switch S1 and the second switch S2; and the second switch group 140 includes two relays, the two relays being respectively connected in series with the first switch S1 and the second switch S2.

The combination of the isolating switch and a device capable of interrupting load current is adopted. Devices such as the circuit breaker and a contactor can interrupt load current in the circuit but cannot serve as a reliable electrical isolation method. Therefore, the isolating switch is used in combination with devices such as the circuit breaker or the contactor, with one set of devices interrupting the load current, and the isolating switch then serving as a reliable electrical isolation method.

In the technical solution of the embodiment of this application, to achieve reliable isolation, with the circuit breaker or the relay is used in combination with the isolating switch. The circuit breaker or relay is employed to cut off the load current in the circuit, and the isolating switch then isolates the system, achieving complete decoupling of the power module 120 and the energy storage module 110, ensuring reliable isolation.

According to some embodiments of this application, still referring to FIG. 2. In some embodiments, the second switch group 140 includes the power module 120.

In the technical solution of the embodiment of this application, the power module 120 in the energy storage valve submodule 100 is directly modulated to reduce the circuit current of the energy storage valve submodule 100 to near zero, achieving load current interruption, and the isolating switch then isolates the system, achieving the electrical disconnection between the power module 120 and the energy storage module 110. This solution is simpler and more cost-effective.

In some embodiments, the power module 120 includes a first switch element and an energy storage element connected in parallel with the first switch element, and the energy storage element is connected in parallel with the energy storage module 110 through the switch module 130.

A plurality of first switch elements may be provided. The plurality of first switch elements are connected in series and/or in parallel, and the energy storage element is connected in parallel with the plurality of first switch elements connected in series and/or in parallel. In a specific embodiment, the plurality of first switch elements connected in series and/or in parallel include a full-bridge circuit or a half-bridge circuit. When connecting the power module 120 to the energy storage module 110, the energy storage element can be charged first, reducing the impact of large currents on the first switch element, thereby improving the reliability of the energy storage valve submodule 100.

In the technical solution of the embodiment of this application, the power module 120 includes a half-bridge circuit or a full-bridge circuit. It should be noted that the half-bridge circuit is a power circuit including two switching tubes, and the full-bridge circuit is a power circuit including four switching tubes. The half-bridge circuit is low-cost and simple in circuit; and the full-bridge circuit is higher in cost and relatively complex in circuit. However, the full-bridge circuit has less interference and higher reliability compared to the half-bridge circuit. This achieves flexible configuration of the power module 120, enhancing the design flexibility of the energy storage valve submodule 100.

According to some embodiments of this application, referring to FIG. 6, FIG. 6 shows a schematic structural diagram of a power module in an energy storage valve submodule provided by an embodiment of this application. For ease of description, only the parts related to this embodiment are shown, with details as follows:

The full-bridge circuit includes a first switching tube T1, a second switching tube T2, a third switching tube T3, a fourth switching tube T4, a first diode D1, a second diode D2, a third diode D3, a fourth diode D4, and a first capacitor C1.

An input terminal of the first switching tube T1, a negative terminal of the first diode D1, an input terminal of the third switching tube T3, a negative terminal of the third diode D3, and a first terminal of a first capacitor C1 collectively serve as a first positive terminal of the full-bridge circuit; an output terminal of the second switching tube T2, a positive terminal of the second diode D2, an output terminal of the fourth switching tube T4, a positive terminal of the fourth diode D4, and a second terminal of the first capacitor C1 collectively serve as a first negative terminal of the full-bridge circuit; an output terminal of the third switching tube T3, a positive terminal of the third diode D3, an input terminal of the fourth switching tube T4, and a negative terminal of the fourth diode D4 collectively serve as a second positive terminal of the full-bridge circuit; and an output terminal of the first switching tube T1, a positive terminal of the first diode D1, an input terminal of the second switching tube T2, and a negative terminal of the second diode D2 collectively serve as a second negative terminal of the full-bridge circuit.

The first positive terminal of the full-bridge circuit is a first positive terminal of the power module 120; the second positive terminal of the full-bridge circuit is a second positive terminal of the power module 120; the first negative terminal of the full-bridge circuit is a first negative terminal of the power module 120; and the second negative terminal of the full-bridge circuit is a second negative terminal of the power module 120.

It should be noted that the above switching tubes include a triode, a field-effect transistor, and an insulated gate bipolar transistor.

The full-bridge circuit operates in a first transfer state as follows: The positive terminal of the third diode D3 is connected to a first direct current output from a power grid, the negative terminal of the third diode D3 outputs the first direct current to the energy storage module 110, the positive terminal of the second diode D2 is connected to the first direct current charged by the energy storage module 110, and the negative terminal of the second diode D2 outputs the first direct current charged by the energy storage module 110 to the power grid.

The full-bridge circuit operates in a second transfer state as follows: The input terminal of the third switching tube T3 is connected to a second direct current output from the positive electrode of the energy storage module 110, the output terminal of the third switching tube T3 outputs the second direct current to the power grid, the input terminal of the second switching tube T2 is connected to the second direct current fed back from the power grid, and the output terminal of the second switching tube T2 outputs the fed-back second direct current to the negative electrode of the energy storage module 110.

The full-bridge circuit operates in a first cut-off state as follows: The input terminal of the fourth switching tube T4 is connected to the first direct current output from the power grid, the output terminal of the fourth switching tube T4 outputs the first direct current to the positive terminal of the second diode D2, and the negative terminal of the second diode D2 outputs the first direct current.

The full-bridge circuit operates in a second cut-off state as follows: The positive terminal of the first diode D1 is connected to a third direct current, the negative terminal of the first diode D1 outputs the third direct current to the input terminal of the third switching tube T3, and the output terminal of the third switching tube T3 outputs the third direct current.

The full-bridge circuit can self-eliminate direct-current faults and is applicable to scenarios with high input voltages.

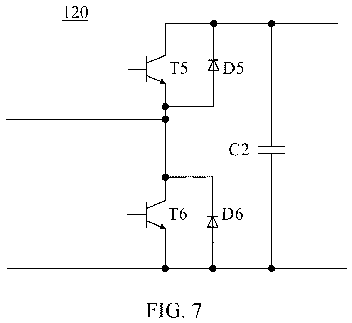

According to some embodiments of this application, referring to FIG. 7, FIG. 7 shows a schematic structural diagram of a power module in an energy storage valve submodule provided by an embodiment of this application. For ease of description, only the parts related to this embodiment are shown, with details as follows: The half-bridge circuit includes a fifth switching tube T5, a sixth switching tube T6, a fifth diode D5, a sixth diode D6, and a second capacitor C2.

An input terminal of the fifth switching tube T5, a negative terminal of the fifth diode D5, and a first terminal of the second capacitor C2 collectively serve as a first positive terminal of the half-bridge circuit; an output terminal of the sixth switching tube T6, a positive terminal of the sixth diode D6, and a second terminal of the second capacitor C2 collectively serve as a first negative terminal and a second negative terminal of the half-bridge circuit; and an output terminal of the fifth switching tube T5, a positive terminal of the fifth diode D5, an input terminal of the sixth switching tube T6, and a negative terminal of the sixth diode D6 collectively serve as a second positive terminal of the half-bridge circuit.

The first positive terminal of the half-bridge circuit is the first positive terminal of the power module 120; the second positive terminal of the half-bridge circuit is the second positive terminal of the power module 120; the first negative terminal of the half-bridge circuit is the first negative terminal of the power module 120; and the second negative terminal of the half-bridge circuit is the second negative terminal of the power module 120.

It should be noted that the above switching tubes include a triode, a field-effect transistor, and an insulated gate bipolar transistor.

The half-bridge circuit operates in a first transfer state as follows: The positive terminal of the fifth diode D5 is connected to the first direct current output from the power grid, the negative terminal of the fifth diode D5 outputs the first direct current to the positive electrode of the energy storage module 110, and the negative electrode of the energy storage module 110 outputs the first direct current charged by the energy storage module 110 to the power grid.

The half-bridge circuit operates in a second transfer state as follows: The input terminal of the fifth switching tube T5 is connected to the second direct current output from the positive electrode of the energy storage module 110, the output terminal of the fifth switching tube T5 outputs the second direct current to the power grid, and the power grid feeds back the second direct current to the negative electrode of the energy storage module 110.

The half-bridge circuit operates in a first cut-off state as follows: The input terminal of the sixth switching tube T6 is connected to the first direct current output from the power grid, and the output terminal of the sixth switching tube T6 outputs the first direct current.

The half-bridge circuit operates in a second cut-off state as follows: The positive terminal of the sixth diode D6 is connected to the third direct current, and the negative terminal of the sixth diode D6 outputs the third direct current.

The structure of the half-bridge circuit is simple and the cost is low.

In some embodiments, the energy storage valve submodule 100 further includes a controller. The controller is connected to the power module 120 and the switch module 130, and the controller is configured to output a drive signal and a control signal. The drive signal is configured to drive the power module 120 to turn on and off, and the control signal is configured to control the switch module 130 to turn on and off.

The controller can also output a drive signal with a preset duty cycle to modulate the power module 120, causing the current between the power module 120 and the energy storage module 110 to change, for example, approaching zero to achieve load current interruption, or a duty cycle of 100% to achieve full conduction. A plurality of control signals are output by the controller and typically consist of high and low levels, and the control signals are configured to drive the switches in the switch module 130 to turn on and off.

In some embodiments, the controller includes a submodule controller (SubModuleController, SMC), the SMC is configured to monitor an operating state of the energy storage valve submodule 100, receive control information issued by a valve base controller (Valve Base Controller, VBC) of the energy storage valve, and transmit the state of the energy storage valve submodule 100 to the VBC. At the same time, when the SMC detects a fault in the energy storage valve submodule 100, the SMC controls the power module 120 and the switch module 130 to turn off, bypassing the energy storage module 110, and transmits fault information to the VBC, ensuring that other submodules continue to operate normally.

In the technical solution of the embodiment of this application, both the power module 120 and the switch module 130 can be controlled online using the controller, achieving the intelligent and automated operation of the energy storage valve submodule.

According to some embodiments of this application, this application further provides an energy storage valve, including the energy storage valve submodule 100 described above; and the energy storage valve submodules 100 can be connected in series to a power grid.

Since the energy storage valve includes the energy storage valve submodule 100 of any of the above solutions, each energy storage valve submodule 100 can disconnect the power module 120 from the energy storage module 110 through the switch module 130 in an electrically isolated manner, decoupling the power module 120 and the energy storage module 110 electrically. During maintenance of components other than the energy storage module 110 in the energy storage valve, leakage current is prevented, ensuring the personal safety of maintenance personnel. Similarly, in the case of a non-severe fault on the energy storage module 110 side of the energy storage valve, the switch module 130 can be used to isolate the energy storage module 110 from the system under the premise that the energy storage valve is locked, without affecting the safe operation of the entire system, improving system availability.

According to some embodiments of this application, this application further provides an energy storage station, including the energy storage valve submodule 100 of any of the above solutions.

It should be noted that the energy storage station includes a plurality of energy storage valve submodules 100. The plurality of energy storage valve submodules 100 are connected in series and/or in parallel.

Since the energy storage station includes the energy storage valve submodule 100 of any of the above solutions, during maintenance, the power module 120 and the energy storage module 110 can be electrically decoupled, ensuring the personal safety of maintenance personnel. Similarly, in the case of a non-severe fault on the energy storage module 110 side of the energy storage station, the switch module 130 can be used to isolate the energy storage module 110 from the system under the premise that the energy storage station is locked, without affecting the safe operation of the entire system, improving system availability.

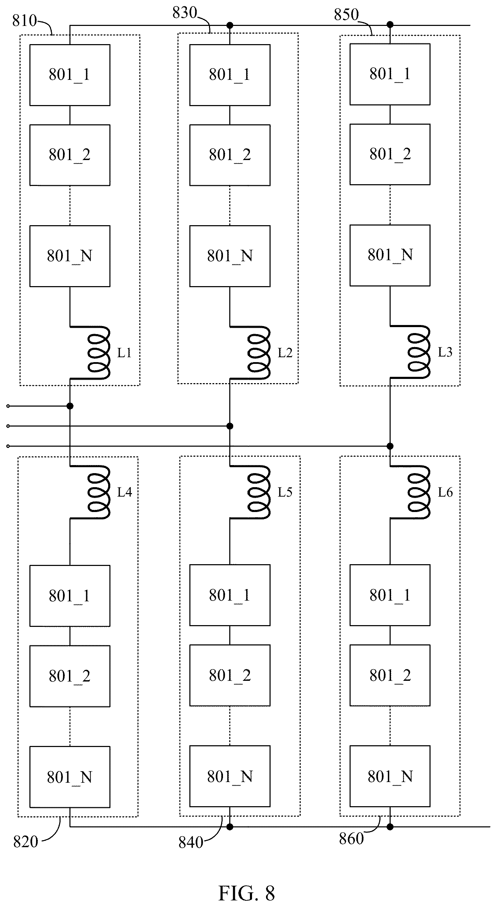

FIG. 8 shows a schematic structural diagram of an MMC-type alternating-current direct-connected energy storage system applicable to an energy storage station provided by an embodiment of this application. As shown in FIG. 8, the MMC-type alternating-current direct-connected energy storage system includes six converter bridge arm groups, the six converter bridge arm groups (that is, the energy storage valve) including a first converter bridge arm group 810, a second converter bridge arm group 820, a third converter bridge arm group 830, a fourth converter bridge arm group 840, a fifth converter bridge arm group 850, and a sixth converter bridge arm group 860. The first converter bridge arm group 810 and the second converter bridge arm group 820 are connected in series, the third converter bridge arm group 830 and the fourth converter bridge arm group 840 are connected in series, and the fifth converter bridge arm group 850 and the sixth converter bridge arm group 860 are connected in series; a connection point between the first converter bridge arm group 810 and the second converter bridge arm group 820, a connection point between the third converter bridge arm group 830 and the fourth converter bridge arm group 840, and a connection point between the fifth converter bridge arm group 850 and the sixth converter bridge arm group 860 are respectively connected to a three-phase alternating-current power grid. Each converter bridge arm group consists of N energy storage valve submodules 801 and other auxiliary devices connected in series, where N is a positive integer. As shown in FIG. 8, the N energy storage valve submodules 801 include energy storage valve submodules 801_1, 801_2, ..., and 801_N. The auxiliary devices may be starting devices and/or switching devices and/or line protection devices and/or sampling devices. For example, the auxiliary devices may be reactors L1 to L6 as described in FIG. 8.

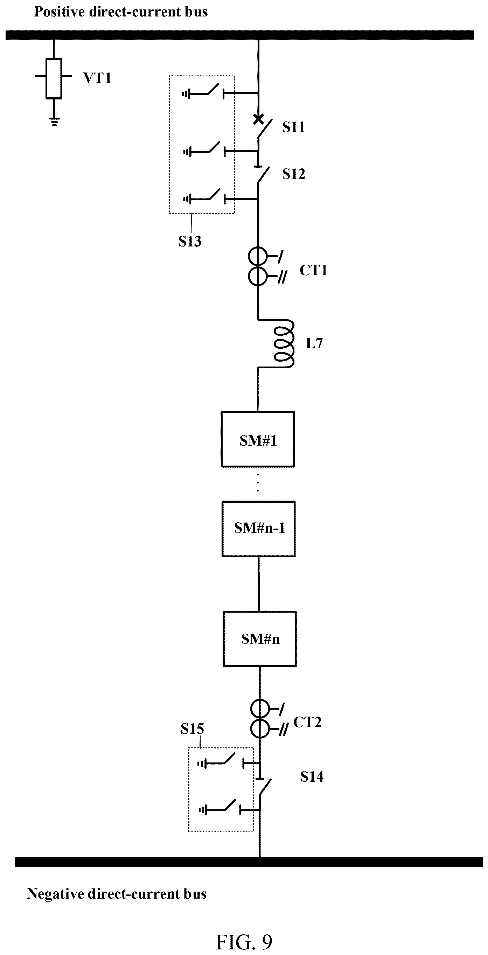

FIG. 9 shows a schematic structural diagram of a direct-current direct-connected energy storage system provided by an embodiment of this application. As shown in FIG. 9, the direct-current direct-connected energy storage system, also referred to as an energy storage valve, consists of n energy storage valve submodules SM and other auxiliary devices connected in series, where n is a positive integer. As shown in FIG. 9, the n energy storage valve submodules SM include energy storage submodules SM#1, ..., SM#n-1, and SM#n. The auxiliary devices may be starting devices and/or switching devices and/or line protection devices and/or sampling devices. For example, the auxiliary devices may include a fast switch S11 between a positive electrode of the n energy storage valve submodules SM and a positive direct-current bus, an isolating knife switch S12, a grounding knife switch S13 connected to two ends of the fast switch S11 and two ends of the isolating knife switch S12, a current transformer CT1, a current-limiting reactor L7, an isolating knife switch S14 between a negative electrode of the n energy storage valve submodules SM and the positive direct-current bus, a grounding knife switch S15 connected to two ends of the isolating knife switch S14, and a current transformer CT2. Additionally, a voltage transformer VT 1 is provided on the positive direct-current bus.

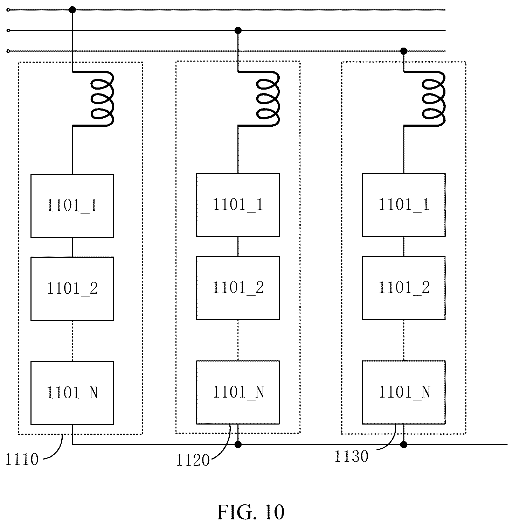

FIG. 10 shows a schematic structural diagram of an alternating-current direct-connected energy storage system applicable to an energy storage station provided by an embodiment of this application. As shown in FIG. 10, the alternating-current direct-connected energy storage system includes three converter bridge arm groups, the three converter bridge arm groups (that is, the energy storage valve) including a first energy storage valve 1110, a second energy storage valve 1120, and a third energy storage valve 1130. The first energy storage valve 1110, the second energy storage valve 1120, and the third energy storage valve 1130 are respectively connected to a three-phase alternating-current power grid. Each energy storage valve consists of N energy storage valve submodules 1101 and other auxiliary devices connected in series, where N is a positive integer. As shown in FIG. 10, the N energy storage valve submodules 1101 include energy storage valve submodules 1101_1, 1101_2, ..., and 1101_N. The auxiliary devices may be starting devices and/or switching devices and/or line protection devices and/or sampling devices. For example, the auxiliary devices may be a reactor as described in FIG. 10.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification, but includes all technical solutions falling within the scope of the claims.

## Claims

1. An energy storage valve submodule, comprising an energy storage module, a power module, and a switch module; wherein the power module is connected to the energy storage module through the switch module, or the power module disconnects an electrical connection from the energy storage module through the switch module, forming electrical isolation.

2. The energy storage valve submodule according to claim 1, wherein the switch module comprises a first switch group, and the first switch group is connected to a positive terminal and a negative terminal of the power module and a positive electrode and a negative electrode of the energy storage module.

3. The energy storage valve submodule according to claim 2, wherein the first switch group comprises a first switch and a second switch;
the first switch is connected between the positive terminal of the power module and the positive electrode of the energy storage module; and
the second switch is connected between the negative terminal of the power module and the negative electrode of the energy storage module.

4. The energy storage valve submodule according to claim 3, wherein the first switch and the second switch each comprise a load switch.

5. The energy storage valve submodule according to claim 3, wherein the first switch and the second switch each comprise an isolating switch.

6. The energy storage valve submodule according to claim 5, wherein the switch module further comprises a second switch group configured to interrupt load current, and the second switch group is connected to the first switch group.

7. The energy storage valve submodule according to claim 6, wherein the second switch group comprises a solid-state circuit breaker, and the solid-state circuit breaker is connected in series with the first switch or the second switch.

8. The energy storage valve submodule according to claim 6, wherein the second switch group comprises:
two circuit breakers, the two circuit breakers being respectively connected in series with the first switch and the second switch.

9. The energy storage valve submodule according to claim 6, wherein the second switch group comprises:
two relays, the two relays being respectively connected in series with the first switch and the second switch.

10. The energy storage valve submodule according to claim 6, wherein the power module serves as the second switch group configured to interrupt load current.

11. The energy storage valve submodule according to any one of claims 1 to 10, wherein the power module comprises a first switch element and an energy storage element connected in parallel with the first switch element, and the energy storage element is connected in parallel with the energy storage module through the switch module.

12. The energy storage valve submodule according to any one of claims 1 to 11, wherein the power module comprises a half-bridge circuit or a full-bridge circuit.

13. The energy storage valve submodule according to any one of claims 1 to 12, further comprising a controller, wherein the controller is connected to the power module and the switch module, the controller is configured to output a drive signal and a control signal, the drive signal is configured to drive the power module to turn on and off, and the control signal is configured to control the switch module to turn on and off.

14. An energy storage valve, wherein the energy storage valve comprises the energy storage valve submodule according to any one of claims 1 to 13.

15. An energy storage station, wherein the energy storage station comprises the energy storage valve submodule according to any one of claims 1 to 13.
